# EUROPÄISCHE PATENTANMELDUNG

(11) **EP 0 950 584 A2**
(43) Veröffentlichungstag der Anmeldung: **20.10.1999**
(21) Anmeldenummer: 99104815.8
(22) Anmeldetag: 11.03.1999
(51) Int. Cl.: B60R 22/14

(54) **Kinderschutz für Kraftfahrzeuge**

(30) Priorität: 18.04.1998 DE 19817329; 18.04.1998 DE 29807029 U
(71) Anmelder: Kern, Werner, 54296 Trier (DE); Vogt, Manfred, 54316 Holzerath (DE)
(72) Erfinder: Kern, Werner, 54296 Trier (DE); Vogt, Manfred, 54316 Holzerath (DE)
(74) Vertreter: Kossobutzki, Walter, Dipl.-Ing.(FH)

(57) **Zusammenfassung**

Die Erfindung bezieht sich auf einen aufblasbaren Kinderschutz (2) für den Sitz eines Kraftfahrzeuges, bestehend aus zwei mit Abstand nebeneinander angeordneten Seitenkammern (3), einer dieselben überbrückenden und an den Seitenkammern angeschlossenen Unterkammer (5), einer mit der Unterkammer über ein Zwischenteil verbundenen, eine Tischfläche bildenden Oberkammer (7) sowie aus einem zwischen Unterkammer und Oberkammer an dem Zwischenteil (9) anlegbaren Sicherheitsgurt (14).

Um den Kinderschutz (2) leicht und platzsparend im Reisegepäck transportieren und an einem fernen Ort innerhalb kürzester Zeit einsetzen zu können ist die Oberkammer (7) von der Unterkammer (5) getrennt und die Oberkammer über das kompakt ausgebildete und eine Aussparung für den Sicherheitsgurt (14) aufweisende Zwischenteil (9) klappbar an der Unterkammer angeschlossen und in ihrem vorderen Bereich mit dem vorderen Bereich der Unterkammer verbindbar.

## Beschreibung

Die Erfindung bezieht sich auf einen aufblasbaren Kinderschutz für den Sitz eines Kraftfahrzeuges, bestehend aus zwei mit Abstand nebeneinander angeordneten Seitenkammern, einer dieselben überbrückenden und an den Seitenkammern angeschlossenen Unterkammer, einer mit der Unterkammer über ein Zwischenteil verbundenen, eine Tischfläche bildenden Oberkammer sowie aus einem zwischen Unterkammer und Oberkammer an dem Zwischenteil anlegbaren Sicherheitsgurt.

Aus der DE-OS 196 14 141 ist ein aufblasbarer Kinderschutz für den Sitz eines Kraftfahrzeuges bekannt, der zunächst aus zwei mit Abstand nebeneinander angeordneten Seitenkammern besteht, die sich seitlich des Kindes befinden. Auf diesen Seitenkammern stützt sich eine, den Abstand dazwischen überbrückende Unterkammer ab, die mit den beiden Seitenkammern in Strömungsverbindung steht. Die Unterkammer geht an ihrem dem Kind zugewandten Ende ohne nennenswerte Querschnittsveränderung in ein als Kammer ausgebildetes Zwischenteil über, das sich etwa senkrecht zur Unterkammer nach oben erstreckt. Kurz oberhalb der Unterkammer geht das Zwischenteil, ebenfalls ohne nennenswerte Querschnittsveränderung, in eine Oberkammer über, die mit ihrer oberen Seite eine Art Tischfläche bildet. Zwischen Unterkammer und Oberkammer ist ein Spalt vorhanden, in den das zum unteren Anschlußpunkt führende Gurtteil eines Sicherheitsgurtes einge führt wird, dessen anderes Teil schräg nach oben zum oberen Anschlußpunkt des Sicherheitsgurtes verläuft.

Ein solcher Kinderschutz dient dazu, denselben platzsparend auf einer Urlaübsreise mitnehmen und beispielsweise am Urlaubsort in einem Mietwagen anschließen zu können. Dadurch soll ein Kind in einem Urlaubsland auch dann bei Autofahrten geschützt werden, wenn in ein fernes Land aus platzgründen ein üblicher Kindersitz nicht mitgenommen werden kann. Ein solcher Kinderschutz nimmt im nicht aufgeblasenen Zustand äußerst wenig Platz in Anspruch, so daß er bei Fernreisen problemlos im Urlaubsgepäck untergebracht werden kann. Am Urlaubsort ist er dann innerhalb kürzester Zeit, beispielsweise in einem gemieteten Fahrzeug, einsetzbar.

Umfangreiche Versuche mit einem solchen Kinderschutz haben nun das Ergebnis gebracht, daß derselbe aufgrund der Tatsache, daß die Oberkammer, das Zwischenteil, die Unterkammer und die beiden Seitenkammern miteinander in Strömungsverbindung stehen, nicht die angestrebte Sicherheit bieten, da die in den einzelnen Kammern befindliche Luft, beispielsweise bei einem Auffahrunfall, in andere Kammern abströmen kann, in denen sie dann keine Wirkung zeigt. Darüber hinaus ist das schräg von unten nach oben verlaufende Gurtteil des Sicherheitsgurtes, welches normalerweise für den Schutz einer erwachsenen Person ausgelegt ist, für ein Kind gefährlich.

Der Erfindung liegt deshalb die Aufgabe zugrunde, den bekannten, aufblasbaren Kinderschutz so weiterzubilden, daß er unter Beibehaltung der bekannten Vorteile - leicht und platzsparend im Reisegepäck transportierbar und an einem fernen Ort innerhalb kürzester Zeit einsetzbar - eine optimale Sicherheit für ein Kind bietet.

Zur Lösung dieser Aufgabe wird gemäß der Erfindung bei einem aufblasbaren Kinderschutz der eingangs beschriebenen Gattung vorgeschlagen, daß die Oberkammer von der Unterkammer getrennt ist und die Oberkammer über das kompakt ausgebildete und eine Aussparung für den Sicherheitsgurt aufweisende Zwischenteil klappbar an der Unterkammer angeschlossen und in ihrem vorderen Bereich mit dem vorderen Bereich der Unterkammer verbindbar ist.

Dadurch bedingt, daß jetzt die Oberkammer von der Unterkammer und damit auch von den beiden Seitenkammern getrennt ist, kann, beispielsweise bei einem Auffahrunfall, aus der Oberkammer keine Luft abströmen, so daß die Oberkammer bzw. deren Tischfläche einen besonders guten Schutz für das Kind bildet und damit die Gefahr von Kopfverletzungen weitgehend ausschließt. Selbstverständlich ist auch dieser Kinderschutz für jede andere Beförderung von Kindern, insbesondere von Kleinkindern, einsetzbar.

Weitere Merkmale eines Kinderschutzes gemäß der Erfindung sind in den Ansprüchen 2 bis 6 offenbart.

Die Erfindung wird nachfolgend anhand eines in einer Zeichnung in schematischer Weise dargestellten Ausführungsbeispieles näher erläutert. Dabei zeigen
- Fig. 1: eine Ansicht eines Kinderschutzes gemäß der Erfindung von vorne,
- Fig. 2: eine Seitenansicht des Kinderschutzes der Fig. 1 und

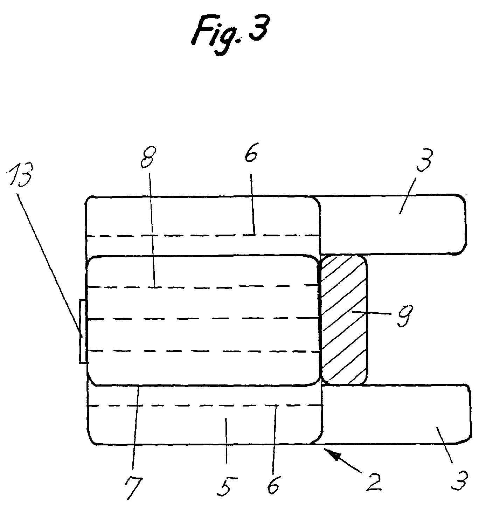

- Fig. 3: eine Draufsicht auf den Kinderschutzes der Fig. 1.

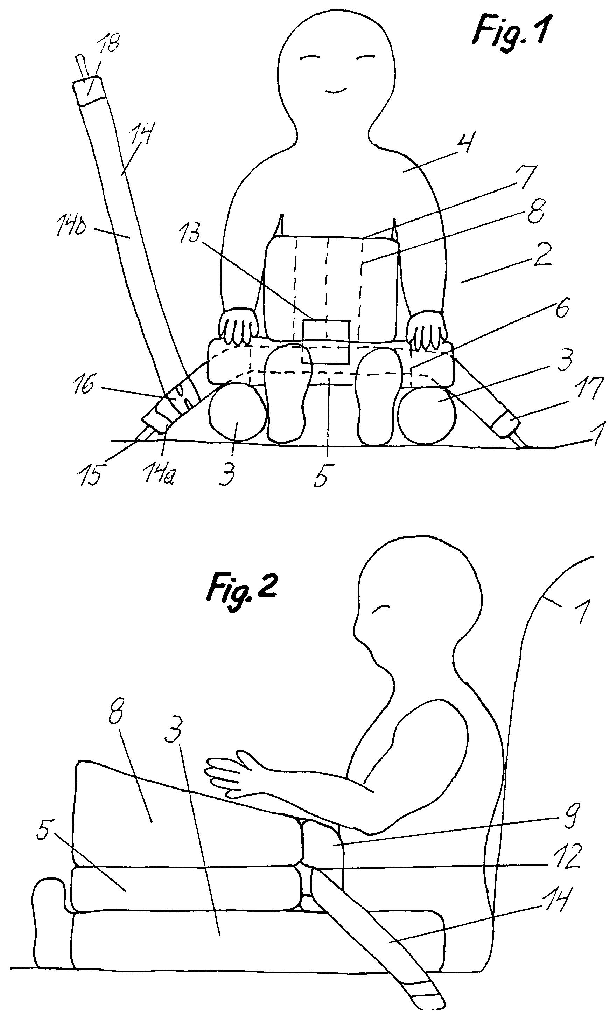

In der Fig. 1 und 2 der Zeichnung ist ein Sitz 1, beispielsweise ein Rücksitz, eines Personenkraftwagens angedeutet, auf dem sich ein aufblasbarer Kinderschutz 2 gemäß der Erfindung im jeweils aufgeblasenen Zustand befindet. Dieser Kinderschutz 2 weist, im Gegensatz zu üblichen Kindersitzen, keine Rückenkammer und keine Sitzkammer auf.

Der Kinderschutz 2 besteht aus zwei mit Abstand voneinander angeordneten Seitenkammern 3, die beispielsweise einen kreisförmigen Querschnitt besitzen und die in vorteilhafter Weise aus Kunststoff gefertigt sind. Auch ein anderer Werkstoff ist möglich. Über nicht dargestellte Ventile kann jede Seitenkammer 3 getrennt aufgeblasen werden. Die Höhe des Querschnittes der aufgeblasenen Seitenkammern 3 entspricht in etwa dem Querschnitt der Oberschenkel eines nur angedeuteten Kindes 4. Die Länge der Seitenkammern 3 stimmt in etwa mit der Tiefe der Auflagefläche des Sitzes 1 überein. Der Abstand zwischen den beiden Seitenkammern 3 ist nun so gewählt, daß sich dazwischen die Beine des Kindes 4 weitgehend frei bewegen können.

Die beiden Seitenkammern 3 sind durch eine darauf befindliche Unterkammer 5, beispielsweise durch Schweißung, fest miteinander verbunden, wobei der Innenraum der Unterkammer 5 auch mit den Innenräumen der beiden Seiten kammern 3 in Strömungsverbindung stehen kann. Bei einer solchen Ausbildung sind die beiden Seitenkammern 3 und die Unterkammer 5 nur über ein Ventil aufblasbar.

Die Unterkammer 5 ist in vorteilhafter Weise durch mehrere, in der Zeichnung nur angedeutete, Stege 6 (Fig. 4) in mehrere, miteinander in Strömungsverbindung stehende Teilkammern unterteilt, so daß die Unterkammer 5 auch bei erhöhtem Luftdruck ihren Querschnitt weitgehend beibehält.

Direkt über der Unterkammer 5 befindet sich eine Oberkammer 7, die ebenfalls aus einem geeigneten Werkstoff, beispielsweise Kunststoff, gefertigt ist. Auch diese Oberkammer 7 besitzt in ihrem Inneren nur angedeutete Stege 8, durch die die Oberkammer 7 in mehrere, jedoch miteinander in Strömungsverbindung stehende Teilkammern unterteilt ist. Auch dies stellt sicher, daß die Oberkammer 7 bei einer Erhöhung des Luftdruckes weitgehend ihren Querschnitt beibehält. Die Oberkammer 7 wird über ein getrenntes Ventil mit Luft gefüllt.

Die Oberkammer 7 ist nun über ein Zwischenteil 9 fest mit der Unterkammer 5 verbunden. Das Zwischenteil 9 besteht aus geschäumtem Kunststoff und ist mit einer aufkaschierten Außenhaut, ebenfalls aus Kunststoff versehen. Über eine Lasche 10 ist das Zwischenteil 9 in seinem oberen Bereich mit der oberen Rückseite der Oberkammer 7, beispielsweise durch Schweißung, verbunden. Die Lasche 10 bildet hier somit ein Gelenk, über das die Oberkammer 7 aus ihrer gezeichneten Lage gemäß Fig. 2 nach oben geschwenkt werden kann. Auch die Unterkammer 5 ist an ihrer unteren Rückseite mit dem Zwischenteil 9, beispielsweise durch Schweißung verbunden, wobei diese Verbindung gelenkig sein kann. Bedarfsweise kann auch eine feste Verbindung zwischen den Seitenkammern 3 und dem Zwischenteil 9 bestehen.

Die Fig. 2 läßt erkennen, daß das kompakte Zwischenteil 9 an seiner der Unterkammer 5 zugewandten Seite eine Aussparung 12 für einen Sicherheitsgurt 14 aufweist. Aus der Zeichnung ist ferner erkennbar, daß die Oberkammer 7 schmäler als die Unterkammer 5 ausgebildet ist. Dadurch entstehen auf der Unterkammer 5 - seitlich neben der Oberkammer 7 - Freiflächen, auf die ein Kind seine Arme bzw. die Hände auflegen kann. Der Sicherheitsgurt 14 ist als sogenannter Dreipunktgurt ausgebildet, der an seinem zum unteren Anlenkpunkt 15 führenden Gurtteil 14a mit einer besonderen Klammer 16 bestückt ist. Diese Klammer 16 dient dazu, das vom Anschlußpunkt 17 zum oberen Anlenkpunkt 18 führende Gurtteil 14b aufzunehmen, so daß dasselbe zunächst auch zwischen der Unterkammer 5 und der Oberkammer 7 in der Aussparung 13 des Zwischenteiles 9 zum Anliegen gebracht werden kann. Erst von der Klammer 16 führt das Gurtteil 14b dann zu dem oberen Anlenkpunkt 18.

Im dargestellten Ausführungsbeispiel ist an der vorderen Fläche der Oberkammer 7 ein Gurtteil 13 vorgesehen, über das die Oberkammer 7 in ihrem vorderen Bereich mit der Unterkammer 5, beispielsweise über eine Art Klettverschluß, verbunden werden kann. Dadurch ist ausgeschlossen, daß sich die Oberkammer 7 unbeabsichtigt nach oben in eine Schwenklage bewegen kann.

## Patentansprüche

1. Aufblasbarer Kinderschutz für den Sitz eines Kraftfahrzeuges, bestehend aus zwei mit Abstand nebeneinander angeordneten Seitenkammern, einer dieselben überbrückenden und an den Seitenkammern angeschlossenen Unterkammer, einer mit der Unterkammer über ein Zwischenteil verbundenen, eine Tischfläche bildenden Oberkammer sowie aus einem zwischen Unterkammer und Oberkammer an dem Zwischenteil anlegbaren Sicherheitsgurt,
dadurch gekennzeichnet,
daß die Oberkammer (7) von der Unterkammer (5) getrennt ist und die Oberkammer (7) über das kompakt ausgebildete und eine Aussparung (12) für den Sicherheitsgurt (14) aufweisende Zwischenteil (9) klappbar an der Unterkammer (5) angeschlossen und in ihrem vorderen Bereich mit dem vorderen Bereich der Unterkammer (5) verbindbar ist.

2. Kinderschutz nach Anspruch 1,
dadurch gekennzeichnet,
daß das Zwischenteil (9) in seinem unteren, vorderen Bereich klappbar am unteren, hinteren Bereich der Unterkammer (5) angeschlossen ist.

3. Kinderschutz nach Anspruch 1 oder 2,
dadurch gekennzeichnet,
daß die Oberkammer (7) und/oder die Unterkammer (5) durch Stege (6,8) in mehrere, miteinander in Strömungsverbindung stehende Teilkammern unterteilt ist.

4. Kinderschutz nach mindestens einem der Ansprüche 1 bis 3,
dadurch gekennzeichnet,
daß die Oberkammer (7) mit der Unterkammer (5) durch mindestens einen Gurt oder mindestens ein Klettband verbunden ist.

5. Kinderschutz nach mindestens einem der Ansprüche 1 bis 4,
dadurch gekennzeichnet,
daß die Oberkammer (7) eine geringere Breite als die Unterkammer (5) aufweist und sich nur über den Bereich zwischen den beiden Seitenkammern (3) erstreckt.

6. Kinderschutz nach mindestens einem der Ansprüche 1 bis 5,
dadurch gekennzeichnet,
daß der Sicherheitsgurt (14) an seinem zum unteren Anlenkpunkt (15) führenden Gurtteil (14a) eine Klammer (16) zum Anschluß des zum oberen Anlenkpunkt (18) führenden Gurtteiles (14b) aufweist.
